# EUROPEAN PATENT APPLICATION

(11) **EP 2 269 949 A2**
(43) Date of publication of application: **05.01.2011**
(21) Application number: 09726428.7
(22) Date of filing: 02.04.2009
(51) Int. Cl.: B82B 3/00

(54) **DEVICE FOR PRODUCING LIQUID MATERIALS CONTAINING METAL NANO-POWDER**

(30) Priority: 30.04.2008 KR 20080040641
(71) Applicant: Nano Technolngies Co., Ltd., Daedeok-gu, Daejeon 306-801 (KR); Korea Atomic Energy Research Institute, Daejeon 305-353 (KR)
(72) Inventor: LEE, Dong-Jin, Daejeon 302-754 (KR); JO, Jang-Haeng, Gongju Chungcheongnam-do 314-841 (KR); KIM, Ju-Myoung, Daejeon 302-170 (KR); PARK, Joong-Hark, Daejeon 305-728 (KR); SUNG, Nak-Seung, Daejeon 302-775 (KR); KWON, Tae-Won, Daejeon 302-746 (KR); RHEE, Chang-Kyu, Daejeon 305-761 (KR); LEE, Gyoung-Ja, Daejeon 305-155 (KR)
(74) Representative: Herrmann, Uwe
(86) International application number: PCT/KR2009/001692
(87) International publication number: WO 2009/134015

(57) **Abstract**

Disclosed is apparatus for manufacturing liquid material containing nano-powder metal, wherein the time for condensation after evaporating a metal wire through electric explosion is shortened so that the metal particle can have finer size and the lifetime of electrodes is lengthened. The apparatus comprises a chamber in which nozzles are installed radially around the upper area of said chamber for injection and emission of gas and injection of liquid, the inner wall of the which is formed with a spiral inner wall so that the liquid can flow through the wall, and in which collecting hole is provided on a certain portion of the floor for collecting liquid, and electrodes which can be rotated through motors are provided on the upper and lower portion of the chamber, a liquid processing line comprising a liquid supplying pipe which is connected from one side of the lower part of the liquid container to the liquid injecting nozzle of the chamber and supplies the liquid stored in the liquid container to the liquid injecting nozzle through the operation of the pump, a liquid introducing pipe which is connected from the center of the upper end of the liquid container to the collecting hole and lets the liquid collected in the chamber flow into the liquid container, a gas introducing pipe which is connected from one side of the upper end of the liquid container to the gas-emission nozzle and lets the gas emitted from the gas-emission nozzle flow into the liquid container, a mesh filter which is installed in the middle of the liquid container to remove impurities included in the liquid collected from the chamber, and a liquid emitting hole which is installed on one side of the liquid container to emit stored liquid to outside, and a gas processing line including a gas supplying pipe which is connected from one side of the upper part of the gas container to the gas injecting nozzle of the chamber and supplies the gas stored in the gas container to the gas injecting nozzle of the chamber.

## Description

### Technical Field

The present invention relates to apparatus for manufacturing liquid material containing nano-powder metal. More specifically, the invention relates to apparatus for manufacturing liquid material containing nano-powder metal, wherein the time for condensation after evaporating a metal wire through electric explosion is shortened so that the metal particle can have finer size, liquid material containing nano-powder metal is manufactured without any additional processes, and the lifetime of electrodes is lengthened.

### Background Art

The nano-powder metal, which is widely studied and manufactured recently, has extremely fine particle size, and is widely used in various fields due to its unique characteristics that cannot be obtained from other material.

To manufacture nano-powder metal, various apparatus can be used, and recently the apparatus for manufacturing nano-powder metal using electric explosion through pulse current is widely used.

The apparatus of producing nano-powder metal using electric explosion through pulse current can be classified into the apparatus of producing nano-powder metal using electric explosion through pulse current in gas and the apparatus of producing nano-powder metal using electric explosion through pulse current in liquid.

In the apparatus of producing nano-powder metal using electric explosion through pulse current in gas, pulse current is sparked to a metal wire in a chamber filled with inert gas causing electronic explosion and evaporation of the metal wire, and powder metal of very fine size is obtained as the metal wire condenses after evaporation.

Though this apparatus of producing nano-powder metal using electric explosion through pulse current in gas has the merit of producing nano-powder metal in a short time with simple system, the quality of produced nano-powder metal is lowered due to the growth of particles since condensation is carried out for a relatively long period of time by contacting filled gas in the chamber after the evaporation of the wire through explosion and so particles can stick each other.

On the other hand, the apparatus of producing nano-powder metal using electric explosion through pulse current in liquid has been designed to solve the above problem of the apparatus of producing nano-powder metal using electric explosion through pulse current in gas, and aims to shorten the time of condensation after the evaporation of the wire through electric explosion.

In the apparatus of producing nano-powder metal using electric explosion through pulse current in liquid, electric explosion is carried out in the liquid filled in a chamber and cooling is performed by surrounding liquid while the wire is scattered after evaporating through the explosion, shortening the time for condensation.

However, in the apparatus of producing nano-powder metal using electric explosion through pulse current in liquid, boundary surfaces are formed in the liquid when the wire evaporates through explosion, and the particles which scatter through evaporation grows by contacting other particles at the boundary surface, making the quality of the nano-powder metal reduced. Also, the method has the problem of requiring more energy for the evaporation of the wire in the liquid, compared to the apparatus where the chamber is filled with gas.

Meanwhile, the conventional apparatus of producing nano-powder metal using electric explosion through pulse current in liquid or gas uses electrodes installed fixed to the chamber, to which wire is contacted and exploded. Since the wire contacts the same area of the fixed electrode repeatedly, the contacting area of the electrode can be damaged after a certain period of explosion, and so the electrodes should be replaced periodically.

### Disclosure of the Invention

### Object of the Invention

The present invention has been designed to solve the above mentioned problem of prior art apparatus, and aims to provide the apparatus of producing nano-powder metal using electric explosion through pulse current in liquid, which can shorten the time for condensation after the evaporation of the wire through electric explosion, provide metal particles with finer particle size, produce liquid material containing nano-powder metal with no additional processes, and make the lifetime of the electrodes longer.

### Disclosure

In order to achieve the above-mentioned object of the present invention, the apparatus for manufacturing liquid material containing nano-powder metal, wherein the electric explosion is generated by supplying pulse current to a metal wire, the apparatus comprises a chamber in which nozzles are installed radially around the upper area of said chamber for injection and emission of gas and injection of liquid, the inner wall of the which is formed with a spiral inner wall so that the liquid can flow through the wall, and in which collecting hole is provided on a certain portion of the floor for collecting liquid, and electrodes which can be rotated through motors are provided on the upper and lower portion of the chamber, a liquid processing line comprising a liquid supplying pipe which is connected from one side of the lower part of the liquid container to the liquid injecting nozzle of the chamber and supplies the liquid stored in the liquid container to the liquid injecting nozzle through the operation of the pump, a liquid introducing pipe which is connected from the center of the upper end of the liquid container to the collecting hole and lets the liquid collected in the chamber flow into the liquid container, a gas introducing pipe which is connected from one side of the upper end of the liquid container to the gas-emission nozzle and lets the gas emitted from the gas-emission nozzle flow into the liquid container, a mesh filter which is installed in the middle of the liquid container to remove impurities included in the liquid collected from the chamber, and a liquid emitting hole which is installed on one side of the liquid container to emit stored liquid to outside, and a gas processing line including a gas supplying pipe which is connected from one side of the upper part of the gas container to the gas injecting nozzle of the chamber and supplies the gas stored in the gas container to the gas injecting nozzle of the chamber.

### Advantageous Effects

In the apparatus for manufacturing liquid material containing nano-powder metal of the present invention, the wire is evaporated through electric explosion and, while scattering, contacts the liquid flowing through the inner wall of the chamber and cooled by the liquid shortening the time for condensation thereby producing liquid material containing nano-powder metal with finer particle size without additional process of mixing nano-powder of metal and liquid. Also, by using the apparatus of the present invention, the lifetime of the electrodes of the apparatus can be enlarged since the electrodes are rotate by the motor so that the contacting point of the electrode and the wire is not fixed to certain positions but distributed over the area of the electode.

### Brief Description of Drawings

Fig. 1 schematically illustrates the overall apparatus for manufacturing liquid material containing nano-powder metal according to the present invention.
Fig. 2 is a front cross-sectional view showing the internal structure of the chamber of the apparatus for manufacturing liquid material containing nano-powder metal according to the present invention.
Fig. 3 is a plane cross-sectional view showing the structure of the nozzle installed in the chamber of the apparatus for manufacturing liquid material containing nano-powder metal according to the present invention.
Fig. 4 illustrates the operational state of the electrodes prepared in the chamber of the apparatus for manufacturing liquid material containing nano-powder metal according to the present invention.
Fig. 5 is a cross-sectional view showing the liquid processing line of the apparatus for manufacturing liquid material containing nano-powder metal according to the present invention.
Fig. 6 is a cross-sectional view showing the gas processing line of the apparatus for manufacturing liquid material containing nano-powder metal according to the present invention.
Fig. 7 illustrates the condensation of particles after the electric explosion in the apparatus for manufacturing liquid material containing nano-powder metal according to the present invention.

Description of the numerals in the drawings
- 10:: chamber
- 11:: nozzle
- 11a:: gas-injection nozzle
- 11b:: gas-emission nozzle
- 11c:: liquid-injection nozzle
- 12:: interior wall
- 13:: collecting hole
- 14, 14':: electrodes
- 14a, 14a':: rotating axis
- 14b, 14b':: gear
- 15, 15':: motor
- 15a, 15a':: central axis
- 15b, 15b':: gear
- 20:: liquid processing line
- 21:: liquid container
- 21a:: valve for opening and closing
- 22:: liquid supplying pipe
- 22a:: pump
- 23:: liquid introducing pipe
- 24:: gas introducing pipe
- 25:: mesh filter
- 26:: liquid emitting hole
- 26a:: valve for opening and closing
- 27:: gauge
- 28:: safety pin
- 29:: cooler
- 30:: gas processing line
- 31:: gas container
- 31a:: valve for opening and closing
- 32:: gas supplying pipe
- 33:: vacuum
- 34:: controller
- 40:: wire
- 50:: wire supplier
- 60:: power supply
- 70:: trigger
- A:: apparatus for manufacturing liquid material

### Mode for the Invention

The present invention will be described in more detail with reference to the drawings attached.

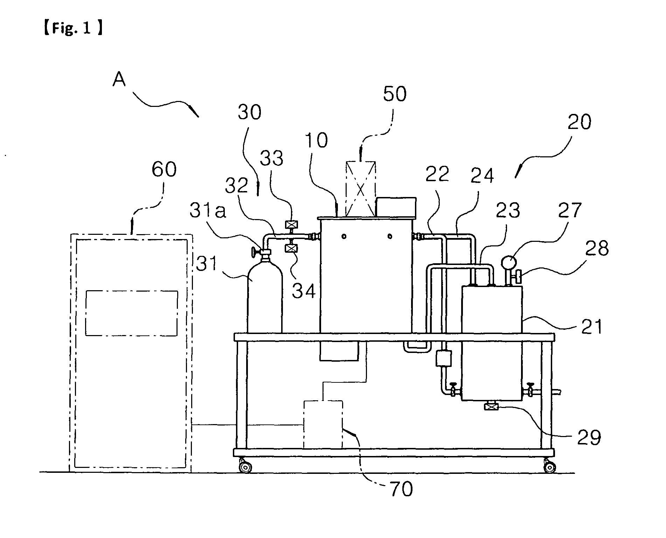

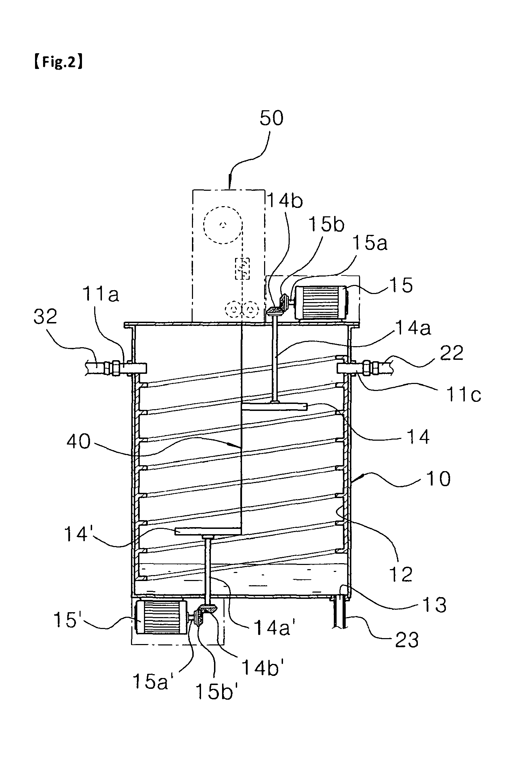

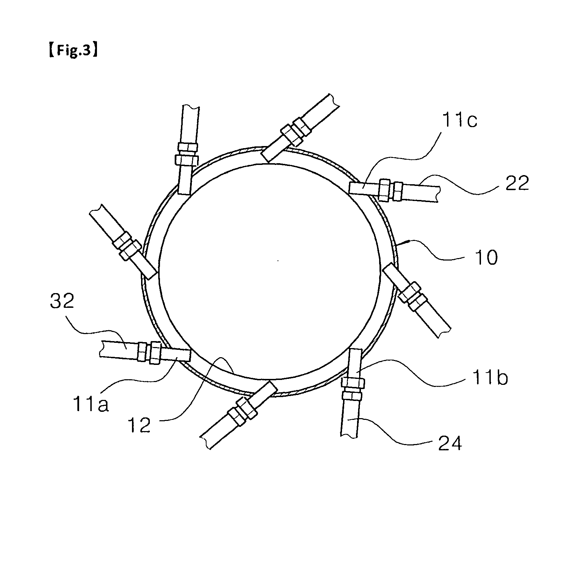

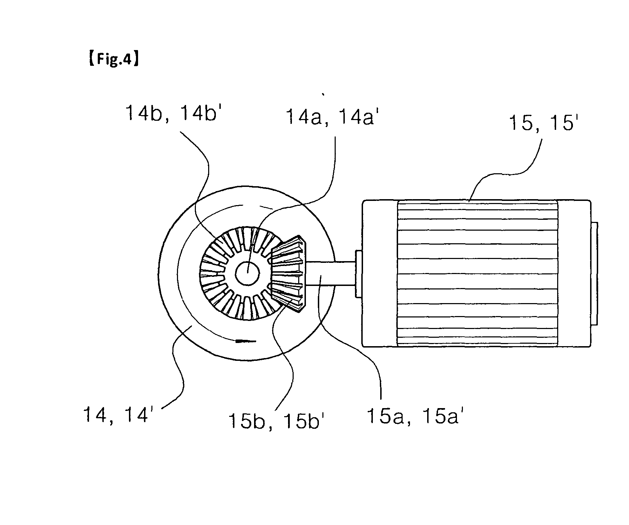

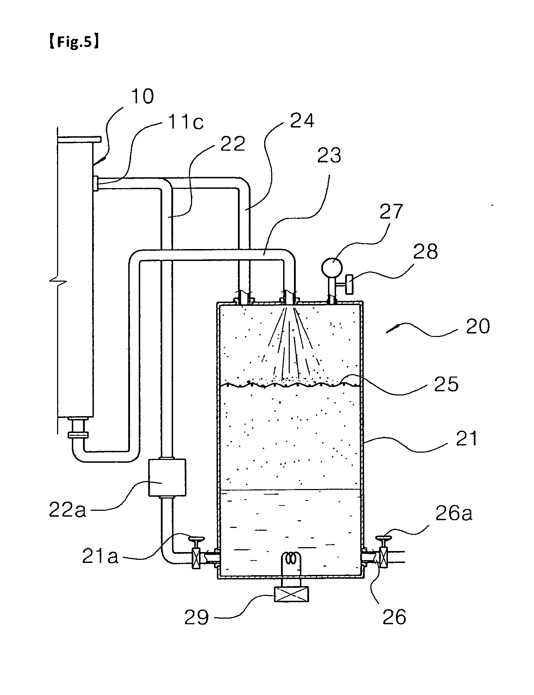

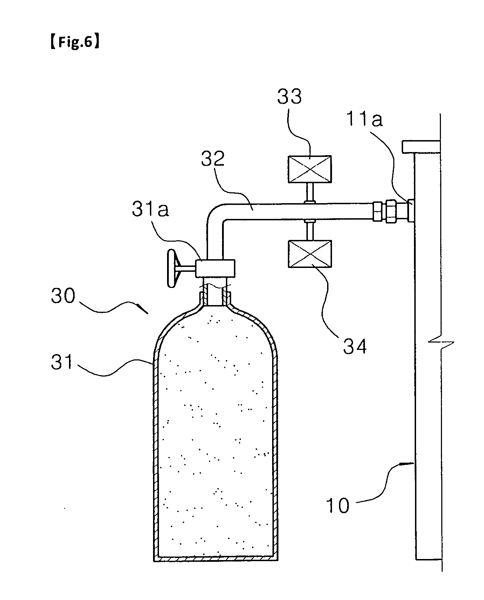

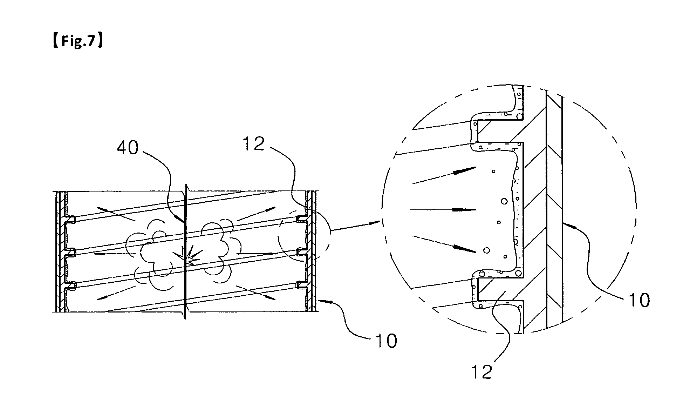

Fig. 1 schematically illustrates the overall apparatus for manufacturing liquid material containing nano-powder metal according to the present invention. Fig. 2 is a front cross-sectional view showing the internal structure of the chamber of the apparatus for manufacturing liquid material containing nano-powder metal according to the present invention, and Fig. 3 a plane cross-sectional view showing the structure of the nozzle installed in the chamber of the apparatus for manufacturing liquid material containing nano-powder metal according to the present invention. Fig. 4 illustrates the operational state of the electrodes prepared in the chamber of the apparatus for manufacturing liquid material containing nano-powder metal according to the present invention. Fig. 5 is a cross-sectional view showing the liquid processing line of the apparatus for manufacturing liquid material containing nano-powder metal according to the present invention, and Fig. 6 a cross-sectional view showing the gas processing line of the apparatus for manufacturing liquid material containing nano-powder metal according to the present invention. Finally, Fig. 7 illustrates the condensation of particles after the electric explosion in the apparatus for manufacturing liquid material containing nano-powder metal according to the present invention.

As shown in Fig. 1, the apparatus A for manufacturing liquid material containing nano-powder metal according to the present invention comprises a chamber 10, liquid processing line 20, and gas processing line 30.

The chamber 10 is the place in which the electric explosion of metal wire is carried out, and, as shown in Fig. 2, nozzles 11 are installed radially around the upper area of the chamber for injection and emission of gas and injection of liquid. The inner wall of the chamber is formed with a spiral inner wall 12 so that the liquid can flow through the wall, collecting hole is provided on a certain portion of the floor for collecting liquid, and electrodes 14, 14', which can be rotated through motors 15, 15', are provided on the upper and lower portion inside the chamber.

The nozzles 11 in the chamber 10 is formed radially as shown in Fig. 3, and the front end of the nozzle 11 is preferably positioned adjacent to the inner wall 12 of the chamber 10 so that the injected material, especially the liquid, can flow downward along the inner wall of the chamber after the injection. The electrodes 14, 14', as shown in Fig. 4, are preferably formed to be rotatable by the motor 15, 15' by matching the gears 14b, 14b' of the rotation axis 14a, 14a' to the gears 15b, 15b' of the central axis 15a, 15a'.

The nozzles 11 of the chamber 10 comprise at least one nozzle 11a for gas injection, at least one nozzle 11b for gas emission and at least one nozzle 11e for liquid injection. The number and location of the nozzles for gas injection 11a, for gas emission 11b and for liquid injection 11c is determined appropriately according to the predetermined amount of injected and emitted gas and injected liquid.

Metal wire 40 is supplied into the chamber 10 through the wire supplier 50 installed on the upper portion of the chamber 10, and the explosion of the metal wire 40 supplied into the chamber 10 is carried out by the power supply 60 supplying pulse current and the trigger 70 which instantly sends out the pulse current from the power supply 60.

The supply of wire 40 through the wire supplier 50 and electric explosion of the wire 40 through the power supply 60 and trigger 70 are well known technology in the field and specific description is omitted.

The liquid processing line 20 performs the role of continuously supplying liquid into the chamber 20 and stores the liquid collected from the chamber, and comprises a liquid supplying pipe 22 which is connected from one side of the lower part of the liquid container 21 to the liquid injecting nozzle 11c of the chamber 10 and which supplies the liquid stored in the liquid container 21 to the liquid injecting nozzle 11c through the operation of the pump 22a, a liquid introducing pipe 23 which is connected from the center of the upper end of the liquid container 21 to the collecting hole 13 and which lets the liquid collected in the chamber 10 flow into the liquid container 21, a gas introducing pipe 24 which is connected from one side of the upper end of the liquid container 21 to the gas-emission nozzle 11b and which lets the gas emitted from the gas-emission nozzle 11b flow into the liquid container 21, a mesh filter 25 which is installed in the middle of the liquid container 21 to remove impurities included in the liquid collected from the chamber 10, and a liquid emitting hole 26 which is installed on one side of the liquid container to emit stored liquid to outside.

In the liquid processing line 20, the liquid container 21 preferably includes valves for opening and closing 21a for controlling supplying of liquid to the liquid supplying pipe 22, a gauge 27 for checking internal pressure, safety pin 28 for controlling internal pressure, and a cooler 29 for controlling the temperature of the stored liquid. The mesh filter 25 preferably is made of stainless steel with more than 300mesh/inch for improved filtering and endurance, and the liquid emitting hole 26 of the liquid container 21 preferably includes valves for opening and closing 26a for controlling emitting of liquid.

Checking and controlling the internal pressure of the container through the gauge and safety pin are well-known technology in the field and are not described in detail here, and also the technology for cooling the material inside the container through cooler.

Meanwhile, the liquid stored in the liquid container 21 of the liquid processing line can be in the type of oil or alcohol, and the liquid injected from the liquid container 21 to the chamber 10 through liquid supplying pipe 20 is injected by force and the liquid introduced from the liquid container 21 to the chamber 10 through liquid introducing pipe 23 is naturally introduced by the increased pressure inside the chamber.

The gas processing line 30 supplies gas into the chamber 10 and, as shown in Fig. 6, is provided with a gas supplying pipe 32 which is connected from one side of the upper part of the gas container 31 to the gas injecting nozzle 11a of the chamber 10 and which supplies the gas stored in the gas container 31 to the gas injecting nozzle 11a of the chamber 10.

In the gas processing line 30, the gas container 31 preferably includes valves for opening and closing 31a for controlling supplying of gas to the gas supplying pipe 32, and the gas supplying pipe 32 preferably includes a vacuum 33 which inhales gas pre-filled in the chamber 10 when the chamber 10 is opened, and a controller 34 which controls the amount of gas emission to a predetermined constant pressure.

Inhaling the gas through a vacuum 30 is a well-known technology in the field and is not described in detail here, and also the technology for controlling the amount of emitted gas through the controller 34.

The gas stored in the gas container 31 of the gas processing line 30 can be argon, nitrogen, oxygen or carbon.

Now, the process of manufacturing liquid material containing nano-powder metal using the apparatus A for manufacturing liquid material containing nano-powder metal according to the present invention will be described in detail.

Before starting the process of manufacturing liquid material containing nano-powder metal, the interior of the chamber 10 should be in the state where gas and liquid are being injected.

The injection of gas into the chamber 10 is carried out by opening the valve for opening and closing 31a prepared in the gas container 31 of the gas processing line 30 so that the gas stored in the gas container 31 is passed through gas supplying pipe 32 and injected by the gas-injection nozzle 11a of the chamber 10.

At this step, the gas is injected by the pressure of the gas container 31 with no additional device, and when the gas is over-filled inside the chamber 10, the gas in the chamber 10 is emitted outside the chamber 10 through the gas-emission nozzle 11b and passed through the gas-introducing pipe 24 and is exited to the liquid container 21.

The injection of liquid into the chamber 10 is carried out through the operation of the pump 22a prepared at the liquid supplying pipe 22 connected to the liquid injection nozzle 11c, and the supplied liquid is injected into the chamber 10 through the liquid-injection nozzle 11c by the operation of the pump 22a and the liquid injected into the chamber 10 flows through the inner wall 12 of the chamber which is formed in spiral form.

While injection of gas and liquid into the chamber 10 is carried out as described above, wire 40 is supplied through the wire supplier 50 prepared at the upper outside of the chamber and the wire 40 is evaporated inside the chamber 10 through electric explosion.

At this step, the electric explosion of the wire 40 is occurred by instantly supplying pulse current while upper and lower electrodes (14, 14') in the chamber 10 are contacted, the pulse current being generated by the power supply 60 and instant supply of the pulse current by the trigger 70.

The generation of pulse current by the power supply 60 and instant emission of the pulse current by the trigger 70 is well known technology in the field and detailed description is omitted.

When the wire 40 evaporates in the chamber 10 through electric explosion, the evaporated particles are scattered and then condensation is carried out by contact-cooling with the liquid flowing through the inner wall 12 of the chamber 10, as described in Fig. 7.

The condensation of the particles by contact-cooling with the liquid flowing through the inner wall of the chamber 10 is carried out for a short time, and extremely fine particles can be formed since the individual particle contacts with other adjacent particles less frequently in the process of condensation and the growth of the particle is limited.

Meanwhile, the liquid containing the condensed particles flows through the inner wall 12 of the chamber 10 and reaches the floor of the chamber 10. Then the liquid is emitted outside the chamber 10 through the collecting hole 13 which is prepared on the floor of the chamber 10, and stored in the liquid container 12 through the liquid introducing pipe 24.

The emission of the liquid through the collecting hole 13 of the chamber 10 is carried out naturally by increased pressure of the chamber 10 due to the injection of liquid into the chamber 10 with additional means, and during the emission, impurities in the liquid are filtered through the mesh filter 25.

The above mentioned process comprising the steps of injecting liquid from the liquid container 21 into the chamber 10 and emitting liquid from the chamber 10 to the liquid container 21 is continuously repeated through circulation until the concentration of the particles in the liquid reaches a predetermined level of concentration. When the concentration of the particles in the liquid reaches a predetermined level, the opening and closing valve 26a of the liquid emitting hole 26 installed in the liquid container is opened and the liquid containing nano-powder metal having fine particle size can be produced in a simple method.

At this step, liquid containing nano-powder metal with pure metal can be obtained by using argon as the gas injected into the chamber, and liquid containing nano-powder metal with nitride, carbide or oxide of metal can be obtained by using nitrogen, carbon or oxygen respectively as the gas injected into the chamber.

Meanwhile, nano-powder of metal as well as the liquid material containing nano-powder metal can also be manufacture by the apparatus A for manufacturing liquid material containing nano-powder metal of the present invention.

Nano-powder of metal is manufactured using the apparatus A for manufacturing liquid material containing nano-powder metal of the present invention by cutting the supply of liquid into the chamber 10.

The cutting of the supply of liquid into the chamber 10 is carried out by controlling the operation of the opening and closing valve 21a so that the opening of the opening and closing valve 21a of the liquid container 21, which controls the supply of liquid from the liquid container 21 to the liquid supplying pipe 22, is closed.

Further, by using the apparatus A for manufacturing liquid material containing nano-powder metal of the present invention, the lifetime of the electrodes 14, 14', which are used for manufacturing, nano-powder of metal or the liquid material containing nano-powder metal, can be enlarged.

In the apparatus A for manufacturing liquid material containing nano-powder metal of the present invention, the electrodes 14, 14' rotate by the driving motors 15, 15', so the contacting region of the wire 40 and electrodes 14, 14' are not restricted to a certain region. Therefore, even when electric explosion of the wire 40 is repeatedly occurred, damage on the electrodes 14, 14' is not restricted to a certain area, and the lifetime of the electrodes 14, 14' can be lengthened.

The present invention, which has been described above with reference to the example, is not limited to the certain embodiment and every modification or equivalent use of the component should be considered to be within the scope of the present invention as claimed in the claims of the present invention.

## Claims

1. Apparatus for manufacturing liquid material containing nano-powder metal, wherein electric explosion is generated by supplying pulse current to a metal wire,
the apparatus comprising:
a chamber in which nozzles are installed radially around the upper area of said chamber for injection and emission of gas and injection of liquid, the inner wall of the which is formed with a spiral inner wall so that the liquid can flow through the wall, and in which a collecting hole is provided on a certain portion of the floor for collecting liquid, and electrodes which can be rotated through motors are provided on the upper and lower portion of the chamber;
a liquid processing line comprising a liquid supplying pipe which is connected from one side of the lower part of the liquid container to the liquid injecting nozzle of the chamber and supplies the liquid stored in the liquid container to the liquid injecting nozzle through the operation of the pump, a liquid introducing pipe which is connected from the center of the upper end of the liquid container to the collecting hole and lets the liquid collected in the chamber flow into the liquid container, a gas introducing pipe which is connected from one side of the upper end of the liquid container to the gas-emission nozzle and lets the gas emitted from the gas-emission nozzle flow into the liquid container, a mesh filter which is installed in the middle of the liquid container to remove impurities included in the liquid collected from the chamber, and a liquid emitting hole which is installed on one side of the liquid container to emit stored liquid to outside; and
a gas processing line comprising a gas supplying pipe which is connected from one side of the upper part of the gas container to the gas injecting nozzle of the chamber and which supplies the gas stored in the gas container to the gas injecting nozzle of the chamber.

2. The apparatus for manufacturing liquid material containing nano-powder metal according to claim 1, wherein the nozzles of the chamber include at least one nozzle for gas injection, at least one nozzle for gas emission and at least one nozzle for liquid injection, the front end of the nozzles being positioned adjacent to the inner wall of the chamber.

3. The apparatus for manufacturing liquid material containing nano-powder metal according to claim 1, wherein the electrodes are formed to be rotatable by the motor by matching the gears of the rotation axis to the gears of the central axis.

4. The apparatus for manufacturing liquid material containing nano-powder metal according to claim 1, wherein the liquid stored in the liquid container of the liquid processing line is oil or alcohol.

5. The apparatus for manufacturing liquid material containing nano-powder metal according to claim 1, wherein the mesh filter is made of stainless steel with more than 300mesh/inch.

6. The apparatus for manufacturing liquid material containing nano-powder metal according to claim 1, wherein the gas stored in the gas container of the gas processing line is argon, nitrogen, carbon or oxygen.
